# EUROPÄISCHE PATENTSCHRIFT

(11) **EP 0 621 738 B1**
(45) Veröffentlichungstag und Bekanntmachung des Hinweises auf die Patenterteilung: **08.03.2000**
(21) Anmeldenummer: 94104939.7
(22) Anmeldetag: 29.03.1994
(51) Int. Cl.: H05B 1/02, H05B 3/48, H01H 85/048

(54) **Sicherungseinrichtung eines Elektro-Heizelementes gegen unzulässige Verringerung der Wärmeabnahme**
Security device for an electric heating element against unacceptably reduced heat transfer
Dispositif de sécurité pour un élément de chauffage électrique contre une réduction inadmissible du transfer de chaleur

(30) Priorität: 23.04.1993 DE 4313339
(43) Veröffentlichungstag der Anmeldung: 26.10.1994
(73) Patentinhaber: E.G.O. Elektro-Gerätebau GmbH, 75038 Oberderdingen (DE)
(72) Erfinder: Berger, Siegbert, D-76139 Karlsruhe (DE)
(74) Vertreter: Patentanwälte Ruff, Beier, Schöndorf und Mütschele

(56) Entgegenhaltungen:
- EP-A- 0 204 850
- FR-A- 2 597 222
- GB-A- 2 186 446

## Beschreibung

Elektro-Heizelemente, beispielsweise Rohrheizkörper oder dgl., die in einem zu beheizenden Medium angeordnet sind und dieses Erwärmen, dementsprechend also durch dieses auch gekühlt werden, sollten gegen unzulässige Verringerung der Wärmeabnahme, beispielsweise durch Fehlen des Mediums (Trockengehen) oder durch Fehlen der Bewegung des Mediums, beispielsweise Ausfall eines Ventilators in Lufterwärmungsanlagen, geschützt werden, weil sonst die Gefahr besteht, daß das Heizelement sich zu hoch erwärmt und damit evtl. brennbare Teile anzündet oder schädigt.

Es ist bekannt, für derartige Zwecke Schmelzsicherungen einzusetzen. Bei der DE-2 101 062 A ist eine gekapselte Schmelzsicherung oder ein entsprechender Bimetallschalter in den Rohrheizkörper mit einbezogen. In irgendeinem mittleren Abschnitt des Rohrheizkörpers ist die Kapsel in Reihe zwischen zwei Abschnitte der Heizwendel eingesetzt. Bei der üblichen Verdichtung, Kalibrierung bzw. Verformung des Rohrheizkörpers ist diese Kapsel mechanisch gefährdet. Außerdem schafft sie ein praktisch unbeheiztes Stück im Rohrheizkörper, was nicht immer akzeptiert wird.

Es ist auch bereits bekanntgeworden, Schmelzsicherungen im Bereich der Enden von Rohrheizkörpern vorzusehen und diese auswechselbar zu gestalten (EP-86 465 B1).

Es ist auch bereits vorgeschlagen worden, bei Überhitzung durch Wegschmelzen einer Isolierschicht zwischen der Heizwendel und einer metallischen Innenseele einen Kurzschluß zu erzwingen (DE-21 24 028 C3) oder durch Beimengung einer bei erhöhter Temperatur schmelzenden Substanz zum die Heizwendel einbettenden Isoliermaterial die Wärmeleitfähigkeit des Isoliermaterials soweit zu verschlechtern, daß ein Durchbrennen der Heizwendel erzwungen wird (DE 32 49 500). Dies erfordert Eingriffe in den generellen Aufbau der Heizwendel, verschlechtert den Wärmeübergang und erhöht den Herstellungsaufwand erheblich.

Aus der FR-A-2 597 222 ist ein Rohrheizkörper zur Beheizung eines Flüssigkeitsbehälters bekanntgeworden, in dessen Innerem, in Reihe mit den Heizwendeln geschaltet, ein Widerstandselement mit PTC-Charakteristik eingeschaltet ist. Es ist so bemessen, daß es durch Erhöhung seines Widerstandes bei einer Temperaturerhöhung den elektrischen Gesamtwiderstand des Rohrheizkörpers erhöht und damit seine Leistung herunterregelt.

Aus der GB-A-2 186 446 ist eine Schmelzsicherung bekanntgeworden, die aufgrund der PTC-Charakteristik ihres Materials eine besonders träge, also die Sicherungsfunktion verzögernde Wirkung hat.

Aufgabe der Erfindung ist es, bei einem Übertemperaturschutz die Nachteile des Standes der Technik zu vermeiden und ihn insbesondere kostengünstig, einfach herstell- bzw. einbaubar sowie schnell ansprechend zu gestalten, wobei er vom Durchmesser des Rohrheizkörpers weitgehend unabhängig, d.h. auch bei geringen Rohrheizkörperdurchmessern einsetzbar sein soll.

Diese Aufgabe wird durch den Anspruch 1 gelöst. Durch die Verwendung eines PTC-Widerstandes als Schmelzsicherung wird ein besonders zuverlässiges Ansprechen ermöglicht. Der PTC-Effekt wirkt sich dabei in mehrfacher Hinsicht vorteilhaft auf die zuverlässige Sicherung gegen Übertemperatur aus: Da die Schmelzsicherung nur einen sehr geringen Anteil am Gesamtwiderstand, von unter 2 % des Gesamtwiderstandes ausmacht, ist an ihr der Strom eingeprägt. Steigt also bei erhöhter Temperatur der Teilwiderstand der Schmelzsicherung an, so erhöht sich damit der Gesamtwiderstand nur unwesentlich, aber die in der Schmelzsicherung frei werdende Leistung erwärmt sie überproportional, so daß sie eher zum Durchbrennen kommt als der üblicherweise aus im wesentlichen temperaturkonstantem Widerstandsmaterial bestehende restliche Heizwiderstand. Diese Wirkung widerspricht an sich dem von einem PTC-Widerstand zu erwartenden Verhalten, bei dem ja wegen seiner widerstandserhöhenden Wirkung eher eine Leistungsaufnahme-Minderung zu erwarten wäre.

Die Schmelzsicherung kann in einem vom Medium umströmten und daher gekühlten Abschnitt des Heizelementes angeordnet sein. Dann arbeitet die Schmelzsicherung insoweit eigenständig, als die Wärmeentwicklung in ihr während des Normalbetriebes vom Medium abgenommen wird und bei Ausbleiben des Mediums durch die dann progressive Leistungserhöhung mit zunehmender Temperatur das Durchbrennen der PTC-Sicherung eingeleitet wird. Sie kann auch in Wärmekopplung zum Restheizwiderstand angeordnet sein, so daß seine Temperatur, die ja ebenfalls ansteigt, mit berücksichtigt wird, ebenso eine eventuelle Wärmeleitung zwischen Sicherungsbereich und Restbereich, beispielsweise über den Rohrheizkörpermantel.

Es ist aber auch möglich, die Schmelzsicherung in einen Bereich zu legen, der außerhalb des Mediums liegt und die das Hochlaufen der Temperatur auslösende Erwärmung gänzlich über andere Bauteile, beispielsweise den Rohrheizkörpermantel auf die Schmelzsicherung zu übertragen. Dabei ist sichergestellt, daß beim Durchbrennen der Heizwendel der Rohrheizkörper im übrigen unbeschädigt bleibt, was jedoch auch durch entsprechende Auslegung der Schmelzsicherung bzw. des ihn enthaltenden Teils des Rohrheizkörpers möglich ist.

Vorzugsweise arbeitet jedoch die Schmelzsicherung als normaler beheizter Abschnitt des Heizelementes, der lediglich im Falle der Übertemperatur bevorzugt in seiner Temperatur hochläuft und durchbrennt. Wenn im Zusammenhang mit dieser Erfindung von "Schmelzsicherung" gesprochen wird, so ist darunter ein Bauteil zu verstehen, das auf irgendeine Art thermischer Zerstörung ausgesetzt wird, z.B. des entsprechenden PTC-Widerstandes oder eines von ihm beheizten, stromführenden Teiles, beispielsweise auch durch Verdampfung etc..

Eine besonders zuverlässige und in Bezug auf die Temperatur sehr genau festgelegte Sicherung kann erreicht werden, wenn für die Schmelzsicherung ein PTC-Widerstandsmaterial verwendet wird, das in einem höheren Temperaturbereich insofern eine Unstetigkeit besitzt, als dort der PTC-Effekt besonders deutlich ausgebildet ist. Ein solches Material kann beispielsweise eine Kobalt-Eisen-Legierung sein, wie Co-25Fe (75 % Kobalt, 25 % Eisen). Dieses Material hat zwischen 850 und 950°C einen extrem steilen Anstieg, fast einen Sprung des spezifischen elektrischen Widerstandes. Damit ergibt sich eine Instabilität, weil in diesem Bereich auch die in diesem Falle dem Widerstand proportionale Leistungsaufnahme und damit Wärmeabgabe des PTC-Widerstandes sprunghaft ansteigt und die Möglichkeit der Wärmeabfuhr als Funktion der Temperaturdifferenz zwischen dem PTC-Widerstand und beispielsweise dem Rohrmantel eines Rohrheizkörpers überschreitet.

Es ist noch zu bemerken, daß es generell bekannt ist, PTC-Widerstände als Heizelemente einzusetzen, beispielsweise aus der DE-31 21 250 C2. Hierbei ist jedoch der Heizwiderstand selbst ein PTC-Widerstand, der bei ansteigender Temperatur die Leistung des Widerstandes verringert und damit das Erreichen zu hoher Temperaturen vermeidet. Bei der Erfindung wird jedoch der PTC-Effekt zur umgekehrten Wirkung benutzt, nämlich um in ihm bei steigender Temperatur eine erhöhte Leistung freizusetzen, was an sich der PTC-Charakteristik zuwider zu laufen scheint.

Die Schmelzsicherung kann aus einem runden Draht aus PTC-Material bestehen, ist jedoch auch als Flachdraht, Band oder dgl. gut einzusetzen, insbesondere, wenn ein solches Material auf einen Isolierkörper aufgewickelt ist. Es ist jedoch auch möglich, ihn als ebenen Körper auf einem isolierenden Substrat oder als zylindrischer Körper auf einem Isolierzylinder anzubringen. Die Gestaltung hängt jeweils von den Bedingungen der Umgebung ab.

Vorzugsweise erfolgt die Sicherung durch Selbstzerstörung des PTC-Elementes, vor allem, da ein Heizelement nach einem durch Trockengehen o.dgl. ausgelösten Störfall ohnehin ausgetauscht werden sollte. Es wäre aber auch möglich, die schnell hochlaufende Temperatur des PTC-Elementes zur Betätigung eines anderen Sicherungsmechanismus einzusetzen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1 und 2: jeweils Detail-Längsschnitte durch ein Rohrheizkörperende,
- Fig. 3: ein Diagramm Widerstand/Temperatur für verschiedene PTC-Materialien und
- Fig. 4: ein Diagramm spezifische Leistung über Temperatur.

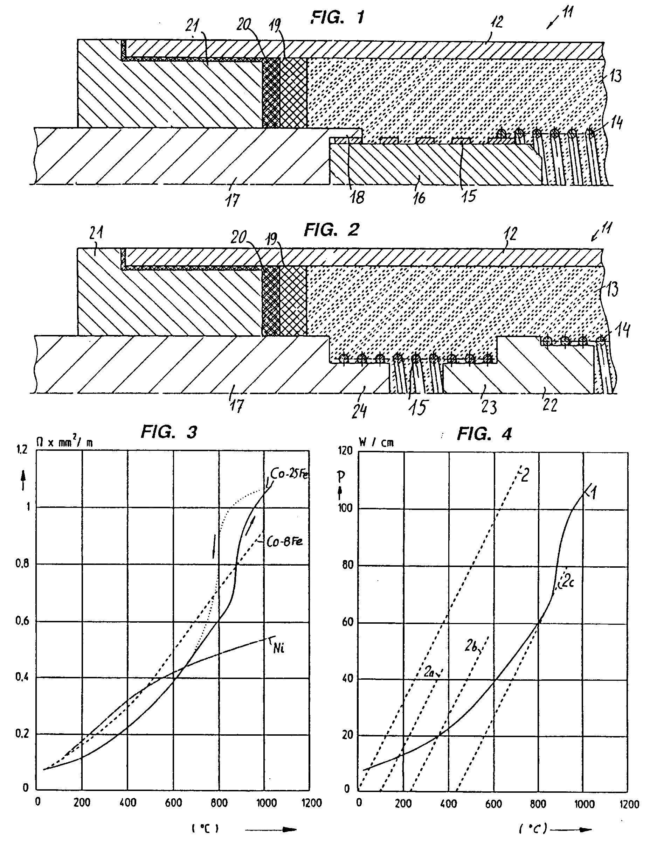

Fig. 1 zeigt ein Teil eines Rohrheizkörpers 11 in erheblicher Vergrößerung. Es ist jeweils nur eine Hälfte bis zur Mittelachse dargestellt. Der Rohrheizkörper weist einen metallischen, beispielsweise aus rostfreiem Stahl bestehenden rohrförmigen Mantel 12 auf, in dem in elekrisch isolierender Einbettmasse 13 ein elektrischer Heizwiderstand 14 liegt. Dieser Heizwiderstand ist als eine Wendel aus üblichem Widerstandsdraht hergestellt, beispielsweise aus einem Nickel-Eisen- oder einem Nickel-Chrom-Eisen-Material, das eine relativ große Temperaturkonstanz des Widerstandes aufweist. Die Einbettmasse 13 besteht normalerweise aus pulverförmigem Magnesiumoxid, das durch Verdichtung, die durch eine Streckung und Kalibrierung des Mantels vervollständigt wird, so kompaktiert wird, daß trotz elektrischer Isolation der Wärmewiderstand zwischen Heizwiderstand 14 und Mantel 12 relativ gering ist.

Der Heizwiderstand 14 ist, beispielsweise durch Schweißung, an einen PTC-Widerstand 15 angeschlossen, der in Form eines wendelförmigen Flachbandes ausgebildet und auf einen zapfenförmigen Isolierkörper 16, beispielsweise aus Keramikmaterial, gewickelt ist.

Im Vergleich zur Rohrheizkörperlänge und damit auch der Länge des Heizwiderstandes 14 ist die Länge des von dem PTC-Widerstand eingenommenen Längenbereiches des Rohrheizkörpers sehr gering und liegt in der Größenordnung von ein bis einigen Rohrheizkörperdurchmessern oder auch darunter. Dementsprechend ist der Anteil des elektrischen Widerstandes des PTC-Widerstandes am Gesamtwiderstand des Rohrheizkörpers sehr gering und liegt unter 2 %, vorzugsweise unter 1 % des gesamten elektrischen Widerstandes.

Der PTC-Widerstand ist an seinem vom Heizwiderstand 14 entfernten Ende an einen zentralen Anschlußstift 17 elektrisch angeschlossen, der ihn mit einem Endabschnitt 18 hülsenförmig umfaßt. Auch dort könnte zur sicheren Verbindung eine Schweißung vorgenommen sein.

Der Rohrheizkörper ist durch eine Zwischenabdichtung 19 und eine weitere Abdichtung 20 sowie durch einen Abschlußpfropfen 21 aus Isolierkeramik abgeschlossen, durch den der Anschlußstift 17 hindurchragt.

Fig. 2 zeigt eine insofern geänderte Ausführungsform, als bei im übrigen gleicher Ausbildung der Heizwiderstand 14 an einen aus leitendem Material bestehenden Zwischenbolzen 22 angeschlossen ist, in dem der wendelförmige Heizwiderstand 14 den Zwischenbolzen 22 umfaßt und daran durch Schweißung befestigt ist, während auf einem endseitigen, ggf. auf einen kleineren Durchmesser abgesetzten Abschnitt 23 des Zwischenbolzens sowie auf einem entsprechend abgesetzten Endabschnitt 24 des Anschlußstiftes 17 in entsprechender Weise der PTC-Widerstand 15 angebracht ist, der in diesem Falle als Wendel aus Runddrahtmaterial ausgebildet ist. Diese Ausführung ist dann sinnvoll, wenn der PTC-Widerstand bezüglich Dicke etc. vergleichbare mechanische Eigenschaften mit dem übrigen Heizwiderstand hat, so daß beim Strecken des Rohrheizkörpers während der Herstellung sich keine Ungleichmäßigkeiten ergeben. Der PTC-Widerstand könnte jedoch auch andere Formen haben, beispielsweise als rohrförmiger Mantel, als Folienabschnitt oder auch als gerader Draht ausgebildet sein.

Obwohl die Anordnung am Ende, d.h. dem Anschlußbereich des Rohrheizkörpers, bevorzugt ist, könnte er auch an anderer Stelle im Rohrheizkörper eingeschaltet sein.

Als PTC-Material, d.h. als Material mit ausgeprägtem postiven Temperaturkoeffizienten des Widerstandes, ist besonders ein Kobalt-Eisenmaterial geeignet und dabei besonders ein mit der Kurzbezeichnung Co-25Fe bezeichnetes Material mit einem Kobaltanteil von 75 % und einem Eisenanteil von 25 %.

Dieses Co-25Fe-Material hat, wie aus Fig. 3 und 4 zu erkennen ist, eine Sprungcharakteristik derart, daß bei Temperaturen zwischen 850 und 900° C (ca. 1100 bis 1150 K) die ansich schon sehr kräftige Zunahme des elektischen Widerstandes nochmals einen erheblichen Sprung nach oben macht. Fig. 3 zeigt auch, daß in dieser Beziehung das Material eine Hysterese hat. d.h. erst bei deutlich geringeren Temperaturen wieder auf den alten Widerstandswert zurückkehrt.

Fig. 3 zeigt ferner das Widerstands-Temperatur-Verhalten von anderen PTC-Materialien, beispielsweise Co-8Fe (92 % Kobalt und 8 % Eisen) sowie die erheblich niedrigere PTC-Eigenschaft von Nickel.

Die Funktion ist wie folgt:

Der Rohrheizkörper 11 dient üblicherweise zur Beheizung eines Mediums, das den Mantel 12 kühlt. Bei normalem Betrieb wird also der über Anschlußstifte 17 an eine Stromquelle angeschlossene Heizwiderstand 14 so beheizt, daß zwischen der Wärmeabnahme über dem Mantel und seiner Leistungsaufnahme sich ein Gleichgewicht bei einer bestimmten Heizwiderstandstemperatur einstellt. Auch der mit dem Heizwiderstand 14 in Reihe geschaltete PTC-Widerstand 15 wird dabei entsprechend seinem Anteil am Gesamtwiderstand Leistung aufnehmen und über der Einbettmasse 13 und dem Mantel 12 entweder direkt an das Medium abgeben oder über entsprechende Längsankopplung an den Rest des Rohrheizkörpers. In jedem Falle wird sich bei üblichen Betriebstemperaturen ein Gleichgewicht zwischen Wärmeerzeugung und Wärmeabgabe an das Medium einstellen, bei dem der PTC-Widerstand sich auf einer Temperatur befindet, die er mit Sicherheit auch über lange Zeiten erträgt. Bei Verwendung des Rohrheizkörpers zum Erwärmen von Wasser sind die Temperaturen im Rohrheizköper selten kritisch, weil sie durch die gute Wärmeabnahme meist in der Größenordnung unter 200° C (ca. 470 K) liegen. Das Wärmegleichgewicht wird einerseits von den Wärmeübertragungseigenschaften, der Art und Temperatur des zu erwärmenden Mediums bestimmt und andererseits durch die spezifische Leistung (auf die Heizkörper-Längeneinheit oder -Flächeneinheit bezogen).

Im Normalbetrieb bildet sich also sowohl für den Heizwiderstand 14 als auch für den Bereich, in dem der PTC-Widerstand 15 angeordnet ist, ein stabiler Arbeitspunkt heraus, der in Fig. 4 als Schnittpunkt zwischen der Linie 1 (Temperaturgang des Widerstandes für den PTC-Widerstand 15) mit den Kurven 2, 2a und 2b symbolisiert ist.

Die Linien 2, 2a und 2b symbolisieren verschiedene Arbeits-Temperaturbereiche, die üblicherweise beim Erwärmen von Flüssigkeiten im Hausbereich auftreten, wobei auch innerhalb eines Gerätes eine beispielsweise anfänglich im Bereich der Linie 2a liegende Charakteristik sich in Richtung auf die Linie 2b verschieben kann, wenn Verkalkung an dem Heizkörper auftritt und damit die Wärmeübertragungsverhältnisse verschlechtert werden.

Die PTC-Drahttemperaturen (Schnittpunkt zwischen 1 und 2....) liegen dabei in einem stabilen Bereich, in dem der PTC-Widerstand ungefährdet ist. Treten jedoch Umstände auf, die den Rohrheizkörper insgesamt gefährden können, beispielsweise das Fehlen von zu beheizendem Medium (Trockengang bei Flüssigkeitserwärmung, Ausfall einer kühlenden Luftströmung o.dgl.) so verschiebt sich die den Verlauf des Wärmeabgabevermögens symbolisierende Kurve 2 in Richtung der Kurve 2c. Da somit die Wärmeabgabe nach außen (direkt oder auch durch verringerte Wärmelängsleitung) verringert ist, steigt insgesamt die Rohrheizkörper-Manteltemperatur an, was im PTC-Widerstand eine überproportionale Temperatursteigerung auslöst, die somit wiederum zu einer erhöhten Leistungsaufnahme in diesem Bereich führt. Die Verringerung der Gesamtleistungsaufnahme des Rohrheizkörpers durch die Widerstandssteigerung im PTC-Bereich ist unerheblich, da infolge des geringen Anteils des mit dem Heizwiderstand in Reihe geschalteten PTC-Widerstandes die Gesamtwiderstandserhöhung nur unerheblich ist. Der Strom am PTC-Widerstand ist also eingeprägt, so daß sich im Beispiel nach Fig. 4 die Leistungsaufnahme des PTC-Widerstandes zwischen 400 und 800° C fast verdreifacht, während die Leistungsaufnahme des Heizwiderstandes 14 unter Umständen sogar etwas verringert.

Fig. 4 zeigt, daß an bzw. rechts von der Kurve 2c sich kein Schnittpunkt mehr mit der Kurve 1 bildet, d.h. die Temperatur in diesem Bereich ungehindert nach oben läuft, so daß in kürzester Zeit eine Selbstzerstörung des PTC-Widerstandes 15 eintritt, sei es nun durch Schmelzen, Durchbrennen (Oxidation oder andere Umwandlungsvorgänge) oder gar Verdampfung.

Es ist dabei zu erkennen, daß die Sprungcharakteristik in dem Temperaturbereich um 900° C dazu beiträgt, daß dieser Arbeitspunkt zuverlässig an einem bestimmten Punkt eintritt. Auch bei einem normalen PTC-Widerstand würde aber bei entsprechender Auslegung dieser Instabilitätspunkt zu erreichen sein und damit der PTC-Widerstand als Schmelzsicherung mit einem deutlich abgrenzbaren, von der Wärmeabnahme und nicht allein von der Temperatur abhängigen Sicherungsverhalten wirken. Der normale Heizwiderstand 14 erfährt zwar während dieses Sicherungsvorganges auch eine gewisse Temperatursteigerung gegenüber dem Normalzustand, die aber nicht so stark ist, daß er selbst zum Durchbrennen kommen müßte oder würde. Vor allem wird dadurch die Überhitzung des Rohrheizkörpermantels, die zu einem Durchbrennen dieses Mantels und damit zu einer Umgebungsgefährdung führen könnte, vermieden. Ein großer Vorteil der PTC-Sicherung ist auch, daß die Vorgänge infolge der Progressivität der Temperatursteigerung bei Überschreitung eines Grenzwertes so schnell ablaufen, daß die zur Zerstörung des PTC-Widerstandes führende Temperaturerhöhung keine den Rohrheizkörpermantel oder andere Umgebungsteile gefährdenden Auswirkungen hat. Es wird also eine vom Wärmeabnahmeverhalten abhängige Sicherung geschaffen, die nicht unmittelbar an die Temperatur des eigentlichen Heizwiderstandes gekoppelt ist. Vielmehr kann durch Beeinflussung der Wärmelängs- und Querleitung, die Wahl des PTC-Materials, seines Anteils an der Gesamtleistung, der Leistungsdichte und der Wärmeübertragungsverhältnisse, des Anbringungsortes und der Wärmeabnahme durch das beheizte Medium die Charakteristik der Sicherung individuell eingestellt werden.

Auch die Formgebung des PTC-Widerstandes und seine Anbringung in dem Elekrowärmegerät beeinflußt die Charakteristik. Außer den beschriebenen Formen könnte er auch auf einem Keramikplättchen oder Keramikrohr in Form einer Paste aufgebracht sein. Zum Erreichen der nötigen spezifischen Flächenbelastung könnte ein zylinderförmiger Leiter, beispielsweise ein Isolierzylinder mit aufgebrachter flächiger Beschichtung oder eine eng gewickelte Drahtwendel sinnvoll sein. Auch die Ankopplung an die Außentemperatur kann auf verschiedene Weise erfolgen. Bei einem Rohrheizkörper ist die Mit-Einbettung in die Einbettmasse im inneren des Rohrheizkörpermantels sinnvoll, während bei anderen Elektrowärmeeinheiten andere Ankopplungsmöglichkeiten, beispielsweise auch direkt an die übrige Beheizung, vorzuziehen sein könnten. Vorteilhaft arbeitet jedoch der PTC-Widerstand unter vergleichbaren Umgebungsbedingungen wie der von ihm zu schützende Heizwiderstand.

## Patentansprüche

1. Sicherungseinrichtung eines Elektro-Heizelementes (11) gegen unzulässige Wärmeabnahme durch das zu beheizende Medium, mit wenigstens einem Heizwiderstand (14) und einer damit in Reihe geschalteten Sicherung (15), die in einem von dem Medium gekühlten Bereich und/oder in thermischer Kopplung mit dem Heizwiderstand (14) bzw. davon beheizten Bauteilen (12) angeordnet ist und wobei die Sicherung einen Widerstand mit positiver Temperaturcharakteristik des elektrischen Widerstandsverhaltens (PTC) enthält, dadurch gekennzeichnet, daß der eine deutlich ausgeprägte positive Temperaturcharakteristik aufweisende PTC-Widerstand als Schmelzsicherung ausgebildet ist und sein elektrischer Widerstand im Normalbetrieb des Heizelementes (11) unter 2 % des Gesamtwiderstandes des Heizelementes (11) beträgt.

2. Sicherungseinrichtung nach Anspruch 1, dadurch gekennzeichnet, daß die Sicherung (15) in einem Rohrheizkörper (11), bevorzugt in dessen Endbereich, angeordnet und vorzugsweise als innerhalb des Mantels (12) des Rohrheizkörpers (11) in verdichteter Isoliermasse (13) eingebettete Wendel ausgebildet ist.

3. Sicherungseinrichtung nach Anspruch 1 oder 2, dadurch gekennzeichnet, daß die Sicherung (15) an den wendelförmigen Heizwiderstand (14) axial, ggf. über ein Verbindungsstück (22) angeschlossen ist.

4. Sicherungseinrichtung nach einem der vorhergehenden Ansprüche, dadurch gekennzeichnet, daß die Sicherung (15) auf einem Träger (16) angeordnet ist.

5. Sicherungseinrichtung nach einem der vorhergehenden Ansprüche, dadurch gekennzeichnet, daß der elektrische Widerstand der Sieherung (15) im Normalbetrieb des Heizelementes unter 1 % des Gesamtwiderstandes des Heizelementes beträgt.

6. Sicherungseinrichtung nach einem der vorhergehenden Ansprüche, dadurch gekennzeichnet, daß die Sicherung (15) aus einem Material besteht, dessen spezifischer elektrischer Widerstand in einem über der normalen Betriebstemperatur des Heizelementes liegenden Temperaturbereich eine über die bis dorthin vorliegende Widerstandszunahme mit steigender Temperatur vorzugsweise sprunghaft hinausgehende Widerstandszunahme aufweist, wie ein Material auf Eisen-Kobalt-Basis, insbesondere Co-25Fe.

7. Sicherungseinrichtung nach einem der vorhergehenden Ansprüche, dadaurch gekennzeichnet, daß das PTC-Material der Sicherung (15) einen Widerstandbereich von 0,05 bis 2 Ohm mm²/m umfaßt und/oder eine Zunahme des spezifischen Widerstandes zwischen 20° C und 1000° C von mehr als dem 5-fachen, vorzugsweise mehr als dem 10-fachen hat.

## Claims

1. Safety device for an electric heating element (11) so as to prevent an inadmissible temperature drop through the medium to be heated, with at least one heating resistor (14) and a fuse (15) connected in series therewith, which is located in an area cooled by the medium and/or is thermally coupled to the heating resistor (14) or components (12) heated by it and in which the fuse contains a resistor with positive temperature characteristics of the electric resistance behaviour (PTC), characterized in that the PTC resistor having clearly pronounced, positive temperature characteristics is constructed as a blowout fuse and its electrical resistance, in the normal operation of the heating element (11), represents below 2% of the overall resistance of the heating element (11).

2. Safety device according to claim 1, characterized in that the fuse (15) is placed in a tubular heater (11), preferably in the end region thereof and is preferably constructed as a coil embedded in compressed insulating material (13) within the casing (12) of the tubular heater (11).

3. Safety device according to claim 1 or 2, characterized in that the fuse (15) is axially connected to the helical heating resistor (14), optionally by means of a connecting piece (22).

4. Safety device according to one of the preceding claims, characterized in that the fuse (15) is placed on a support (16).

5. Safety device according to one of the preceding claims, characterized in that the electrical resistance of the fuse (15), in the normal operation of the heating element, represents below 1% of the overall resistance of the heating element.

6. Safety device according to one of the preceding claims, characterized in that the fuse (15) is made from a material, whose specific electrical resistance in a temperature range above the normal operating temperature of the heating element has a resistance increase preferably exceeding in jump-like manner the up to then existing resistance increase with rising temperature, such as an iron-cobalt-based material, particularly Co-25Fe.

7. Safety device according to one of the preceding claims, characterized in that the PTC material of the fuse (15) covers a resistance range of 0.05 to 2 ohm mm²/m and/or has a specific resistance increase between 20 and 1000°C of more than 5 times, preferably more than 10 times.

## Revendications

1. Dispositif de sécurité d'un élément de chauffage électrique (11) contre une réduction inadmissible du transfert de chaleur par l'agent à chauffer, comprenant au moins une résistance de chauffage (14) et un fusible monté en série (15) qui est disposé dans une zone refroidie par l'agent et/ou se trouve en couplage thermique avec la résistance chauffante (14) respectivement avec les composants chauffés (12) par cette dernière et le fusible comprenant une résistance avec des caractéristiques thermiques positives du comportement électrique de résistance (CTP), caractérisé en ce que la résistance CPT présentant une caractéristique thermique positive clairement marquée est conçue comme un fusible et sa résistance électrique représente en fonctionnement normal de l'élément de chauffage (11) moins de 2 % de l'ensemble de la résistance de l'élément de chauffage (11).

2. Dispositif de sécurité selon la revendication 1, caractérisé en ce que le fusible (15) est disposé dans un corps de chauffage tubulaire (11), de préférence dans sa zone d'extrémité, et est agencé de préférence comme une hélice enrobée à l'intérieur de l'enveloppe (12) du corps de chauffage tubulaire (11) dans une masse isolante compactée (13).

3. Dispositif de sécurité selon la revendication 1 ou 2, caractérisé en ce que le fusible (15) est raccordé à la résistance chauffante hélicoïdale (14) axialement éventuellement par une pièce de raccordement (22).

4. Dispositif de sécurité selon l'une des revendications précédentes, caractérisé en ce que le fusible (15) est disposé sur un support (16).

5. Dispositif de sécurité selon l'une des revendications précédentes, caractérisé en ce que la résistance électrique du fusible (15) représente en fonctionnement normal de l'élément de chauffage moins de 1 % de l'ensemble de la résistance de l'élément de chauffage.

6. Dispositif selon l'une des revendications précédentes, caractérisé en ce que le fusible (15) se compose d'un matériau dont la résistance électrique spécifique présente dans une zone de température se trouvant au-dessus de la température normale de fonctionnement de l'élément de chauffage une augmentation de résistance allant de préférence par à coup au-delà de l'augmentation de la résistance actuellement en présence avec une température croissante, tel que cela est le cas d'un matériau à base de cobalt et de fer, en particulier Co-25Fe.

7. Dispositif selon l'une des revendications précédentes, caractérisé en ce que le matériau PTC du fusible (15) comprend une zone de résistance de 0,05 à 2 Ohm mm²/m et/ou une augmentation de la résistance spécifique entre 20°C et 1000°C de plus de 5 fois de préférence de plus de 10 fois.
